# EUROPÄISCHE PATENTANMELDUNG

(11) **EP 0 925 883 A1**
(43) Veröffentlichungstag der Anmeldung: **30.06.1999**
(21) Anmeldenummer: 98123157.4
(22) Anmeldetag: 04.12.1998
(51) Int. Cl.: B25J 9/10

(54) **Industrierobotersystem**

(30) Priorität: 22.12.1997 DE 19757249
(71) Anmelder: ABB PATENT GmbH, 68309 Mannheim (DE)
(72) Erfinder: Diedrich, Franz, Dipl.-Ing., 61321 Bad Nauheim (DE)
(74) Vertreter: Miller, Toivo

(57) **Zusammenfassung**

Die Erfindung betrifft ein Industrierobotersystem mit wenigstens einem Industrieroboter (20, 21) und mit wenigstens einem ein Basisgestell (11, 12) und einen um eine erste Werkstückachse (13) drehbaren Werkstückhalter (16) zur schwenkbaren Halterung des Werkstückes (17) aufweisenden Werkstückpositionierer. Erfindungsgemäß soll der wenigstens eine Industrieroboter (20, 21) etwa in Verlängerung der ersten Werkstückachse (13) angeordnet sein. Dadurch wird eine verbesserte Ausnutzung des Arbeitsraumes des Industrieroboters erzielt.

## Beschreibung

Die Erfindung betrifft ein Industrierobotersystem nach dem Oberbegriff des Anspruches 1.

Ein Industrieroboter ist gemäß einer DIN-Vorschrift ein universell einsetzbarer Bewegungsautomat mit mehreren Achsen, dessen Bewegungen hinsichtlich Bewegungsfolge und -wegen bzw. -winkeln frei (d. h. ohne mechanischen Eingriff) programmierbar und ggf. sensorgeführt sind.

Industrieroboter dieser Art sind für alle möglichen Aufgaben einsetzbar. In großem Umfang dienen Industrieroboter als Schweißroboter oder Lackierroboter, d.h. als Einrichtungen, mit denen alle möglichen Arten von Handhabungen durchgeführt werden können.

Aus der Firmendruckschrift der Fa. Carl Cloos - Schweißtechnik GmbH in D-35708 Haiger, 1982, ist ein Schweißroboter bekanntgeworden, bei dem ein Industrieroboter neben einem Werkstücktisch angeordnet ist, der Werkstückpositionierer mit zwei Werkstückaufspannplätzen aufweist.

Aus der DE-C2 35 26 076 ist ein Industrierobotersystem bekanntgeworden, bei dem der Werkstückpositionierer auf einer Grunddreheinheit angeordnet ist, die eine Aufnahmeöffnung für den Industrieroboter besitzt, wobei der Industrieroboter in diese Aufnahmeöffnung hineingestellt ist, so daß der Werkstückpositionierer im Wechseltakt um den in der Aufnahmeöffnung angeordneten Industrieroboter schwenkbar ist.

Bei allen diesen Anordnungen befindet sich der Industrieroboter vor dem Werkstückpositionierer, so daß der Bearbeitungsraum des Industrieroboters nicht voll ausgenutzt werden kann.

Aufgabe der Erfindung ist es, eine bessere Ausnutzung des Arbeitsbereiches eines Industrieroboters bzw. Industrierobotersystems der eingangsgenannten Art zu erreichen.

Diese Aufgabe wird erfindungsgemäß durch den Anspruch 1 gelöst.

Erfindungsgemäß ist daher wenigstens ein Industrieroboter etwa in Verlängerung der ersten Werkstückachse angeordnet.

Wenn im folgenden der Begriff 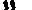 Industrieroboter 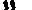 oder 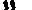 Roboter" benutzt wird, dann ist hiermit immer ein Industrieroboter gemeint, wie er eingangs definiert worden ist.

Der Industrieroboter ist erfindungsgemäß also einem Werkstückpositionierer zugeordnet, ein derartiger Werkstückpositionierer ist aufgebaut aus einem Basisgestell, einem drehbar daran angeordneten Werkstückhalter, der von einem gegebenenfalls im Basisgestell untergebrachten Antrieb verschwenkt wird, wobei die Drehachse des Werkstückhalters die erste Werkstückachse ist und hierbei horizontal verläuft. Auf dem Werkstückhalter kann das Werkstück befestigt sein; es besteht auch die Möglichkeit, daß am Werkstückhalter ein Spannteller drehbar aufgelagert ist, dessen Drehachse dann senkrecht zur ersten Werkstückachse verläuft.

Die Anordnung von Basisgestell, Werkstückhalter und gegebenenfalls Drehteller wird auch kurz Werkstückpositionierer genannt.

Gemäß einer ersten Ausführungsform der Erfindung ist der Roboter ortsfest am Basisgestell angebracht, weswegen der Industrieroboter zusammen mit dem Werkstückpositionierer eine kompakte Einheit bildet. Man kann sagen, daß der Werkstückpositionierer damit Bestandteil des Industrieroboters wird bzw. umgekehrt.

Gemäß einer weiteren Ausführungsform kann die erste Werkstückachse horizontal verlaufen und der Roboter in Verlängerung der Werkstückachse auf das Basisgestell aufgesetzt sein.

Es besteht auch die Möglichkeit, daß die erste Werkstückachse horizontal verläuft und daß der Roboter seitlich neben der Verlängerung der Werkstückachse am Basisgestell befestigt ist.

Durch diese erfindungsgemäße Ausgestaltung wird die Zugänglichkeit des Werkstückes für die Roboterwerkzeuge für viele Anwendungen begünstigt. Gegenüber der üblichen Lösung, bei der Werkstückachsen eher quer zum Roboter liegen, so daß die Drehachse des Roboters, die vertikal verläuft, windschief zur Werkstückdrehachse verläuft, liegen bei der erfindungsgemäßen Zuordnung die Werkstückdrehachsen eher in einer Linie zum Industrieroboter, wodurch die Werkzeuge des Roboters einfacher an das Werkstück herangeführt werden können. Der Arbeitsraum des Roboters wird dadurch erheblich besser ausgenutzt.

Gemäß einer weiteren Ausführungsform der Erfindung kann der Roboter mit der Verschwenkung des Werkstücks um die erste Werkstückachse mit diesem, also dem Werkstück, gleichsinnig und damit gekoppelt verschwenkbar sein.

Dies kann in einer besonders vorteilhaften Ausgestaltung der Erfindung dadurch erfolgen, daß der Roboter drehfest mit dem Werkstückhalter verbunden ist.

Dadurch, daß der Roboter mit der Drehung des Werkstückes gleichsinnig verschwenkbar ist, kann die Lage des Roboters zusammen mit dem Werkstück und dem Werkstückpositionierer so eingestellt werden, daß die Bearbeitungsfläche beispielsweise horizontal liegt. Dies hat besondere Vorteile beispielsweise dann, wenn der Industrieroboter ein Schweißroboter ist. Durch die besondere Zuordnung vom Werkstück zum Roboter kann die Gefahr, daß Schmelzgut beim Schweißvorgang seitlich abfließt, im wesentlichen vermieden werden.

Gemäß einer weiteren Ausführungsform der Erfindung kann der Roboter mit seiner Basis oberhalb der Werkstückachse angeordnet sein und die Werkstückachse verläuft dann durch die vertikale Mittelachse des Industrieroboters.

Der Roboter steht also in vorteilhafter Weise in Verlängerung einer Werkstückdrehachse und daraus ergibt sich eine verbesserte Ausnutzung des Arbeitsbereiches des Roboters. Es ist auch möglich, daß dann wenn die Werkstückdrehachse horizontal steht, der Roboter oberhalb des Werkstückes sitzt, so daß die Werkstückdrehachse und die Roboterachse etwa miteinander fluchten. Wesentlich ist, daß die Werkstückdrehachse etwa durch die Roboterdrehachse verläuft bzw. windschief daran vorbei verläuft oder in einer Linie mit ihr ausgerichtet ist.

Die bevorzugte Lösung ist allerdings diejenige, bei der ein Roboter etwa in Verlängerung einer horizontalen Drehachse des Werkstückes, also der ersten Werkstückdrehachse, verläuft.

Anhand der Zeichnung, in der einige Ausführungsformen der Erfindung dargestellt sind, sollen die Erfindung sowie weitere vorteilhafte Ausgestaltungen und Verbesserungen näher erläutert und beschrieben werden.

Es zeigen
- Fig. 1: eine Seitenansicht auf ein Industrierobotersystem mit zwei Industrierobotern,
- Fig. 2: eine Seitenansicht eines Industrieroboters zur Darstellung des Arbeitsbereiches und Werkstückbereiches,
- Fig. 3: eine Aufsicht auf die Anordnung der Fig. 2,
- Fig. 4: eine weitere Ausführungsform der Erfindung.
- Fig. 5: noch eine weitere Ausführungsform der Erfindung und
- Fig. 6: eine Seitenansicht einer Anordnung, bei der der Werkstückhalter mit dem Roboter drehfest gekoppelt ist.

Auf einer Basisplatte 10, die auf dem Boden aufliegt, sind sich gegenüberliegend zwei Rahmengestelle 11, 12 angeordnet, an denen eine erste Werkstück-Drehachse 13, die horizontal verläuft, gelagert ist, wobei über Halteplatten 14, 15 und einen Halterahmen 16, der eine U-Form besitzt, ein Werkstück 17 mit Drehachsen 18 und 19 um die Achse 13 drehbar gelagert ist. Die Gestelle 11 und 12 enthalten demgemäß Antriebe für den Rahmen 16 und damit für das Werkstück 17. Auf jedem Gestell 11, 12 befindet sich ein Industrieroboter 20, 21 mit einer Basisplatte 22, 23, an der ein erster Arm 24, 25 sowie ein gelenkig damit verbundener zweiter Arm 26, 27 aufgelagert ist; am freien Ende der Arme 26, 27 befinden sich Bearbeitungswerkzeuge 28, 29, beispielsweise Schweißelektroden oder andere Bearbeitungswerkzeuge.

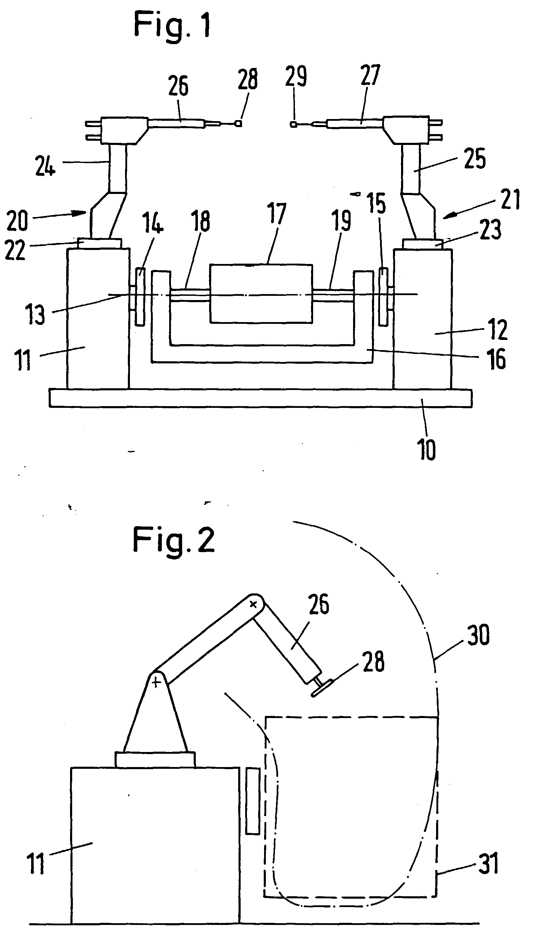

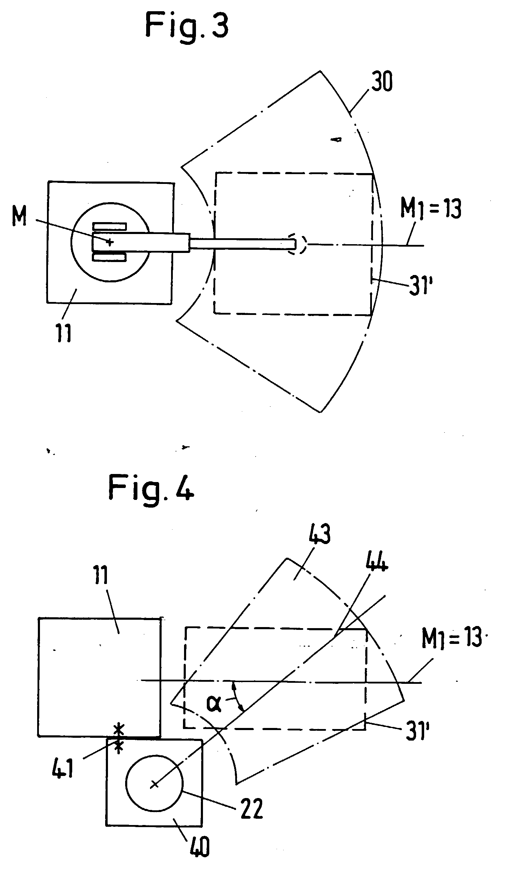

Die Fig. 2 zeigt nun den linken Industrieroboter mit dem Basisgestell 11 und dem Arm 26 mit dem Werkzeug 28. Das Werkzeug 28 kann auf Grund der Anordnung des Industrieroboters in einem strichliert gezeichneten Arbeitsbereich 30 bewegt werden. Strichpunktiert mit der Linie 31 gezeichnet ist der Raum, in dem sich das Werkstück befindet bzw. in dem sich die bearbeitenden Stellen des Werkstückes 17 befinden. Aus der Fig. 3 ist ersichtlich, daß die Mittelachse M des Industrieroboters mit der Mittelachse M₁ des Werkstückpositionierers das Kreissegment 30 ' bzw. der Grundriß des Arbeitsraumes 30 des Roboters den Grundriß des Werkstückbereiches 31 ' überdeckt.

In der Fig. 3 ist dargestellt, daß der Industrieroboter ortsfest auf dem Basisgestell 11 befestigt ist. Es besteht auch die Möglichkeit, die nicht dargestellt ist, daß die Basisplatte 22 des Industrieroboters fest mit dem Drehrahmen 16 verbunden ist, so daß der Industrieroboter zusammen mit dem Werkstück 17 um die Mittelachse 13 verschwenkt werden kann.

Gemäß einer weiteren Ausführungsform der Erfindung ist seitlich zum Basisgestell 11 eine Trägerplatte 40 für den Industrieroboter an dem Basisgestell befestigt, z. B. mittels Schraubverbindungen 41. Auf der Trägerplatte 40 gezeichnet ist die Basisplatte 22 des Industrieroboters, dessen Arbeitsbereich durch ein Kreissegment 43 gebildet ist, dessen Segmentmittelachse 44 unter einem Winkel alpha zur Mittelachse M₁ = 13 ausgerichtet ist. Dadurch kann eine verbesserte Überdeckung des Werkstückraumes 31' erreicht werden, so daß auch hier der Arbeitsbereich des Industrieroboters besser ausgenutzt wird.

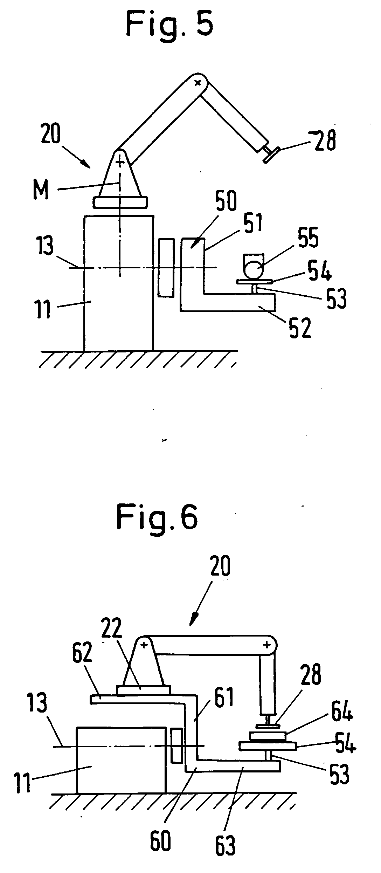

Die Fig. 5 zeigt eine weitere Ausführungsform der Erfindung. An dem Basisgestell oder Rahmengestell 11 ist ein L-förmiger Werkstückhalter 50 mit einem Schenkel 51, der vertikal verläuft, aufgelagert, wobei die Drehachse der Drehachse 13 der Anordnung gemäß Fig. 1 entspricht und demgemäß auch die gleiche Bezugsziffer erhält. Auf dem horizontalen Schenke 52 ist auf einer Drehachse 53 ein Werkstückteller 54 drehbar gelagert, wobei die Drehachse vertikal ausgerichtet ist, d.h. senkrecht zu der Werkstückdrehachse 13. Auf dem Werkstückteller 54 ist ein Werkstück 55 befestigt, welches mittels des Werkzeuges 28 des auf der Oberseite des Rahmengestells 11 aufgebrachten Roboters 20 betätigt bzw. bearbeitet wird.

Auch hierbei befindet sich die Mittelachse M des Roboters etwa in Verlängerung der Drehachse 13 bzw. durchschneidet diese senkrecht.

Die Ausführung gemäß Fig. 6 zeigt das Rahmengestell 11 mit der Drehachse 13, um die ein am Rahmengestell 11 aufgelagerter Halter 60 schwenkbar ist. Der Halter 60 besitzt im Prinzip eine Z-Form, wobei der Mittelsteg 61 senkrecht verläuft und dem L-Schenkel 51 entspricht. An den freien Enden des Mittelsteges 61 sind parallel zur Drehachse 13 verlaufende Schenkel 62 und 63 angeformt, von denen der Schenke 62 die Basisplatte 22 des Roboters 20 trägt. Auf dem Schenke 63 ist über die Drehachse 53 der Werkstückhalter 54 in Form eines Drehtellers aufgelagert, auf dem ein Werkstück 64 befestigt ist, welches von dem Werkzeug 28 des Roboters bearbeitet wird.

Bei dieser Ausführungsform ist der Roboter 20 gleichsinnig verschwenkbar mit dem Werkstück 64 bzw. mit dessen Verdrehung gekoppelt, so daß sich beim Verschwenken des Werkstückes 64 auch der Roboter verschwenkt.

Dies Gleiche könnte auch bei einer Anordnung der Fall sein, wie in der Fig. 1 dargestellt. Dann würde der Roboter 20 beispielsweise mit dem Werkstückhalter 16 gekoppelt, so daß sich sowohl der Roboter als auch das Werkstück um die Drehachse 13 verschwenken können, wobei bei der Ausführung gemäß Fig.1 die Drehachse 13 mit der Werkzeugdrehachse zusammenfällt, wogegen bei der Ausführung nach Fig. 6 die Drehachse 13 lediglich die Drehachse des Werkzeughalters ist.

In allen Fällen ist der Roboter zusammen mit dem Werkzeugpositionierer eine kompakte Einheit, die insgesamt das Industrierobotersystem bildet.

## Patentansprüche

1. Industrierobotersystem, mit wenigstens einem Industrieroboter und mit wenigstens einem ein Basisgestell und einem um eine erste Werkstückachse drehbaren Werkstückhalter zur schwenkbaren Halterung des Werkstückes aufweisenden Werkstückpositionierer, dadurch gekennzeichnet, daß der wenigstens eine Industrieroboter etwa in Verlängerung der ersten Werkstückachse angeordnet ist.

2. Industrierobotersystem nach Anspruch 1, dadurch gekennzeichnet, daß der Roboter ortsfest am Basisgestell angebracht ist.

3. Industrierobotersystem nach Anspruch 2, dadurch gekennzeichnet, daß die erste Werkstückachse horizontal verläuft und der Roboter in Verlängerung der ersten Werkstückachse auf dem Basisgestell aufgesetzt ist.

4. Industrierobotersystem nach Anspruch 2, dadurch gekennzeichnet, daß die erste Werkstückachse horizontal verläuft und der Roboter seitlich neben der Verlängerung der Werkstückachse am Basisgestell befestigt ist.

5. Industrierobotersystem nach Anspruch 1, dadurch gekennzeichnet, daß der Roboter mit Verschwenkung des Werkstücks um die erste Werkstückachse mit diesem gleichsinnig und damit gekoppelt verschwenkbar ist.

6. Industrierobotersystem nach Anspruch 5, dadurch gekennzeichnet, daß der Roboter drehfest mit dem Werkstückhalter verbunden ist.

7. Industrieroboter nach einem der vorherigen Ansprüchen, dadurch gekennzeichnet, daß die Drehachse des Werkstückhalters und die Drehachse des Werkstückes zusammenfallen, wobei die Werkstückdrehachse durch das Werkstück hindurch verläuft.

8. Industrierobotersystem nach einem der Ansprüche 1 bis 6, dadurch gekennzeichnet, daß die erste Werkstückdrehachse außerhalb des Werkstückes verläuft.
